# EUROPEAN PATENT APPLICATION

(11) **EP 3 892 710 A1**
(43) Date of publication of application: **13.10.2021**
(21) Application number: 20168874.4
(22) Date of filing: 09.04.2020
(51) Int. Cl.: C12G 1/02, C12G 1/00, B30B 9/22

(54) **METHOD AND SYSTEM TO PROCESS A CRUSHED VEGETABLE MATERIAL**

(71) Applicant: Noform S.r.l., 30020 Meolo (VE) (IT)
(72) Inventor: CROSATO, REMO, 30020 MEOLO (IT)
(74) Representative: Citron, Massimiliano

(57) **Abstract**

A method is described for processing a crushed vegetable material, e.g. crushed grapes, comprising the steps of:
obtaining the crushed material and send it to a separating machine (10) to separate the juice from the crushed material;
separating a liquid part from the crushed material;
cooling the liquid part in an environment (30) outside the separating machine;
introducing and/or mixing the cooled liquid part in/with the crushed material inside the separating machine (10) or in a part of loading pipe (32) for the separating machine.

## Description

he invention relates to a method and system for processing a crushed vegetable material (composed of juice, pulp, berries and peel), in particular carried out by means of a piston press or pneumatic press or plate press all equipped with one or more pressing membranes, and working single cycle or continuous cycle. The invention may, however, also be applied to the transfer tube or belt or screw of the crushed vegetable material or directly to a crush pump for the crushed vegetable material.

The following description will make reference to wine-making with crushed grapes, a field in which the invention has proved particularly effective.

During harvesting operations, in particular for white-berried grapes, environmental temperatures are around 30 °C and can also exceed such temperatures in case fermentative processes trigger during crushing and pressing. This means hot grapes that, once pressed, immediately start fermentative, oxidative and organoleptic degradation processes.

Existing technology, in order to avoid such product degradation, has developed various systems:
1) the passage of the crushed material into long tube-to-tube heat exchangers for its cooling;
2) cooling pockets applied to the press drum;
3) injection of inert gas into the press.

However, these three systems have several disadvantages.

Tube-to-tube heat exchangers, in order to significantly lower the temperature of the crushed grapes, end up being very long; moreover, since the passage tube normally has a diameter of over 100 mm, they end up cooling only the peripheral part of the material flowing through it, without affecting the internal part of the crushed grapes. All this results in considerable frictional pressure losses and enormous thrust pressures for the upstream pump. In addition, the rubbing of the peel inside the pipes greatly degrades the material even before it enters the press. And the peels are more difficult to cool than the must.

Cooling pockets on the press body are complex to implement technically. Since the press drum is rotatable, the cooling glycol must pass through a rotary joint which, by its nature, can only have reduced passage holes. This results in limited glycol passage with low pocket efficiency. Another problem is that, as the press fills up on average in one hour, the pocket does not have time to significantly lower the temperature of the internal mass, the diameter of the press drum being normally 1 to 3 meters, depending on its load capacity, and therefore the central part of the mass is not affected by the cooling caused by the pocket.

Inerting the press with technical gas turns out to be a palliative because it does not involve the whole mass of the crushed material but normally the empty part of the press during the filling step. Injecting gas into the mass is not easy because the press should be equipped with injectors for gas diffusion inside the cylinder and if injection is used into the press the part of the mass involved by the action is small and relative to the area affected by the injector; in case the injection is instead made directly into the loading pipe, this creates problems to the crushed grapes themselves, especially to the peel.

The main object of the invention is to improve this state of the art.

Another object of the invention is to cool, and preferably inert with technical gas, the crushed material in a better way, to avoid the degradation of the crushed material.

A first aspect of the invention is a method for processing a crushed vegetable material, e.g. crushed grapes, comprising the steps of:
obtaining the crushed material and send it to a (first) separating machine to separate the juice from the crushed material;
separating a liquid part from the crushed material;
cooling the liquid part in an environment outside the separating machine;
feeding and/or mixing the cooled liquid part into/with the crushed material into the separating machine or into a part of a loading pipe for the separating machine.

The advantages of the method are several, e.g.:
the crushed material is cooled by means of a liquid which therefore does not undergo organoleptic degradation during the pumping and cooling steps;
with the cooled liquid part, the peels are cooled through an efficient peel-liquid contact;
it is possible to choose whether to recirculate the must to cool it in the collection tank after the separator, so as to increase the cooling capacity of the system and/or reduce the refrigeration of the exchanger, taking advantage of any non-loading periods of the press. In particular, this recirculation is advantageous, for example, during the dead times of crushing, when the vegetable is being loaded for crushing and there is no more flow of crushed material towards the (first) separating machine. Then a certain amount of liquid can still be kept cold.

The cooling process can be carried out with a tube-bundle heat exchanger, which is much more efficient and more compact than the well-known tube-to-tube heat exchanger, although, for example, the process can also be carried out with a normal tube-bundle heat exchanger and with any other type of heat exchanger;

The cooling process of the crushed material mass inside the separating machine takes place at the same time as the loading step of the separating machine, and no longer by keeping the mass there for hours to macerate/cool; with consequent transfer of unwanted substances from the peels to the must;
the process of inerting or saturation with technical gas involves the whole mass and occurs simultaneously with the injection of cooled must into the crushed material.

A second separating machine, such as a destemmer/crusher, can be used to obtain the crushed material. It is advantageous - in particular - to arrange it very close to the separating machine, with qualitative advantages such as a short load pipe that places little stress on the flowing crushed material.

According to a preferred embodiment, the liquid part is juice obtained inside the separating machine, i.e. the separating machine is used to produce the liquid part to be cooled. This optimizes the utilization and number of components in the system, and shortens the paths that the liquid part has to travel.

According to a different preferred embodiment, the liquid part is juice separated from the crushed material before the crushed material arrives inside the separating machine, i.e. separating means other than the separating machine are used to produce the liquid part to be cooled. In this way it is possible to anticipate the cooling step on the crushed grapes, avoiding their temperature to remain too high for too long.

According to a different preferred embodiment, the liquid part is juice separated from the crushed material in a crushed material transfer pump, in particular generated by the second separating machine, e.g. a destemmer/crusher, feeding the press or the first separating machine. In this way, the cooling step on the crushed material through its liquid part, and its possible inerting, can take place directly in the crushed material transfer pump. E.g., the pump may comprise a device for advancing the crushed material inside a conduit, and a device for separating juice from the crushed material and sending the separated juice outside the pump. E.g., the pump may comprise a cylinder with a rotating screw feeder inside to push the crushed material, and the cylinder is perforated to filter the juice.

According to a preferred embodiment, the liquid part is accumulated outside the separating machine in a accumulation volume prior to the cooling step. The advantage is to un-correlate or de-synchronize the cooling step and the separation step of the liquid part, so as to facilitate the operation of the system components. This variant is even more advantageous if the cooled liquid is recirculated within the accumulation volume, in order to increase the cooling efficiency. This accumulation volume (tank or reservoir) may be advantageously equipped with cooling pockets.

According to a preferred embodiment, an inert gas is added to the liquid part. Thus, the introduction of the liquid part into the separating machine is exploited to simultaneously enrich the crushed material with an inert gas (e.g. nitrogen or CO₂ or compressed air or gas mixtures or dry ice), in order to prevent its degradation. In case of introduction of dry ice, or carbonic snow, in the crushed material or in the liquid, both a considerable further cooling of the must and an inerting of the same would be obtained.

According to a preferred embodiment, the steps of taking and/or cooling and/or recirculating said liquid part are performed continuously, or said steps occur only within predetermined or scheduled time windows.

According to a preferred embodiment, the steps of taking and/or cooling and/or recirculating said liquid parti are performed until the mass of crushed material inside the press has reached a desired temperature.

According to a preferred embodiment, the steps of taking and/or cooling and/or recirculating said liquid part are carried out until the must has reached desired organoleptic characteristics. In this case there are sensors placed in the liquid accumulation volume and/or downstream the heat exchanger: according to the signals received by these sensors a software is configured to decide automatically (or the operator will decide manually) whether to send the crushed material to the draining/recirculation volume, to the first separating machine or into a loading pipe thereof, or to a final must storage tank.

Another aspect of the invention is a system for processing a crushed vegetable material, e.g., crushed grape, comprising:
a (first) separating machine equipped with means or a chamber for separating liquid and solid part of the crushed material;
a heat exchanger that is external to - and preferably separate from - the separating machine and connected to the separating machine so as to
receive liquid part separated by separating machine,
cool it,
and re-send cooled liquid part inside the separating machine to mix it with the crushed material therein, e.g. in the chamber or in said separating means.

Another aspect of the invention is a system for feeding crushed vegetable material, e.g., crushed grape, to a (first) separating machine having means or a chamber for separating liquid and solid parts of the crushed material, comprising:
a conduit external to the separating machine to transfer crushed material into the separating machine,
a separator device to separate liquid and solid part of the crushed material running through the conduit;
a heat exchanger that is
   external to - and preferably separate from - the separating machine and
   connected to the separator device and connectable to the separating machine so as to
      receive liquid part separated by the separator device,
      cool the liquid part,
and re-send cooled liquid part inside the separating machine to mix it with the crushed material therein, e.g. in the chamber or in said means.

Preferably one or each system comprises means for sending cooled liquid part from a draining or accumulation volume to a final storage tank.

Another aspect of the invention is a system analogous to the preceding one applied directly to a crushed material transfer pump for feeding crushed vegetable material, e.g., crushed grape, to a (first) separating machine having means or a chamber for separating liquid and solid part of the crushed material, comprising:
a pump for pumping crushed material,
a conduit external to the separating machine to transfer crushed material from the pump into the separating machine,
a heat exchanger that is
external to - and preferably separate from - the separating machine and the pump, and
connected to the pump and connectable to the separating machine so as to
receive liquid part separated by the pump,
cool the liquid part,
and re-send cooled liquid part inside the separating machine to mix it with the crushed material therein, e.g. in the chamber or in said means.

According to a preferred embodiment, the system of each aspect comprises a tank external to the separating machine for collecting and/or accumulating the separated liquid part or recirculated liquid part from the separating machine or separator device or heat exchanger.

According to a preferred embodiment, the system of each aspect comprises means for pumping liquid part from the external tank to the heat exchanger, e.g. a pump or through pressurized gas.

According to a preferred embodiment, in the system of each aspect the heat exchanger is a tube-bundle heat exchanger, which quickly and efficiently cools the passing liquid without too much friction or pressure drop.

According to a preferred embodiment, the system of each aspect comprises timing means (e.g. a timer or microprocessor) for activating or deactivating the operation of the heat exchanger in determined time windows.

According to a preferred embodiment, the system of each aspect comprises a temperature sensor, placed e.g. inside the separating machine or in said external liquid-part accumulation tank, for detecting the temperature of the crushed material or liquid part.

According to a preferred embodiment, the system of each aspect comprises a diverter valve for diverting a flow of liquid part from the inlet and/or outlet of the heat exchanger to a storage tank for the liquid part.

According to a preferred embodiment, the system of each aspect comprises a diverter valve for recirculating a flow of liquid part from the outlet of the heat exchanger to the same liquid part collection/accumulation tank.

According to a preferred embodiment, the system of each aspect comprises means for injecting gas or a mixture of various gases into the cooled liquid part. E.g., the means for injecting are one or more porous candles, or one or more gas sources.

According to a preferred embodiment, the system of each aspect comprises means for analyzing the organoleptic characteristics of the drained/cooled/recirculated liquid part and a software that automatically decides where to divert the flow of must.

According to a preferred form of embodiment, the system of each aspect comprises a second separating machine connected upstream the first separating machine to feed the latter with crushed material derived from destemmed vegetable material.

Said separator device is, for example, connected downstream the second separating machine.

According to a preferred embodiment, the system of each aspect comprises a pump for crushed material provided with said invention (separating pump) connected upstream the separating machine to feed the latter with crushed material obtained made from destemmed vegetable material.

For example, such separator/pump device is connected downstream the destemmer machine.

According to a preferred embodiment, the separating machine is a pressing press, in particular comprising
a pressing chamber in which the crushed material can be loaded,
a draining sieve adapted to separate the crushed material into solid and liquid part,
an inflatable membrane mounted inside the pressing chamber to press the crushed material against the draining sieve.

A preferred embodiment of the system will now be described with reference to the attached drawing, wherein
fig. 1 shows a variant of the system;
fig. 2 shows a second variant of the system;
fig. 3 shows a third variant of the system.

In the drawings equal numerical references indicate equal parts, and relative terms such as *horizontal* are understood to refer to the press as in use. To avoid crowding the drawings, some repeated items are not always indicated. In the drawings, arrows indicate flow of liquid or crushed material

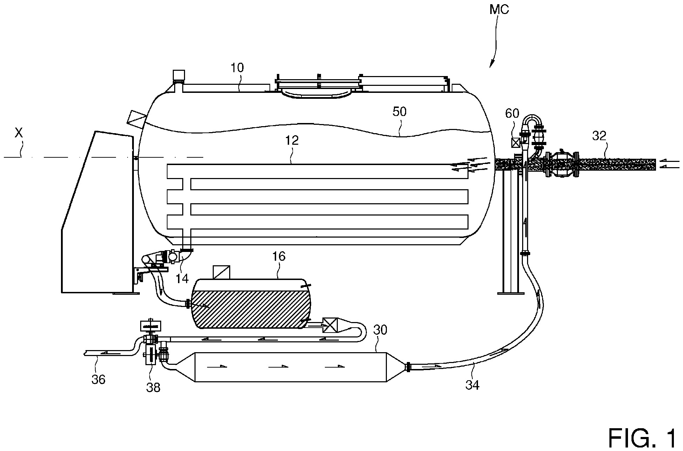

A press MC (Fig. 1) comprises a closed hollow, e.g. cylindrical, drum 10 which is raised above the ground by a frame. The drum 10 may, for example, rotate about a horizontal axis X in a known manner driven by a motor.

Distributed uniformly over the inner surface of the drum 10 are longitudinal draining channels 12, which extend parallel to the axis X for a large part of the length of the drum 10. The draining channels 12 communicate with outlets 14 that carry the juice extracted by the pressing out of the drum 10, to an (optional) collection tank 16.

The drum 10 is loadable with crushed material via an axial duct 32. The drum 10 internally contains a membrane 50 that can be inflated in a known manner, e.g. by a compressor and deflated independently by an aspirator. The membrane 50 is mounted so that at rest (when deflated) it lies approximately flat against an inner wall of the drum 10, while in action (when inflated) it expands from the wall toward the channels 12 to press the crushed material and extract juice (a liquid part) from it.

Such juice is collected in the tank 16. In fact, by means of the press MC, which may be closed or open, the juice drained by the channels 12 is collected and conveyed, by means of, for example, gas or a pump, into the tank 16, which may be closed or open, insulated or not, and equipped or not with a cooling pocket or means for the juice.

From the tank 16, the juice is pumped into a cooling device 30 for the juice, e.g. a tube-bundle heat exchanger.

The juice thus cooled via a conduit 34 is then fed back into the - and/or mixed with the - crushed material inside the press MC. For example, the loading conduit 32 of the press MC is joined to the conduit 34, thereby contact-cooling also the peels coming from the conduit 32.

Or in a variant the cooled juice is also or only recirculated, through a valve system and a conduit, into the tank 16, in order to increase the cooling efficiency.

The process of draining and re-injecting the cooled liquid into the crushed material or recirculating it into the storage tank 16 can preferably last as long as necessary for the desired temperature reduction in the mass inside the press MC, or until the must has reached the desired organoleptic characteristics. Once the desired temperature value for the crushed material inside the press MC has been reached (detected, for example, by a temperature sensor advantageously located either inside the press MC or in the accumulation tank 16), or once the desired organoleptic characteristics of the must/crushed material or the desired degree of gas saturation have been reached, a diverter valve 38 located upstream the storage tank 30 can be activated. Thus, instead of recirculating the liquid part between the press MC, the device 30 and the draining tank 16, it is diverted by the valve 38 to a storage tank (not shown) through a discharge conduit 36.

The system may be improved by adding a gas injection device 60, such as a porous candle.

The device 60 is used for injecting gases or gas mixtures or carbonic snow into the cooled juice and from there into the crushed material.

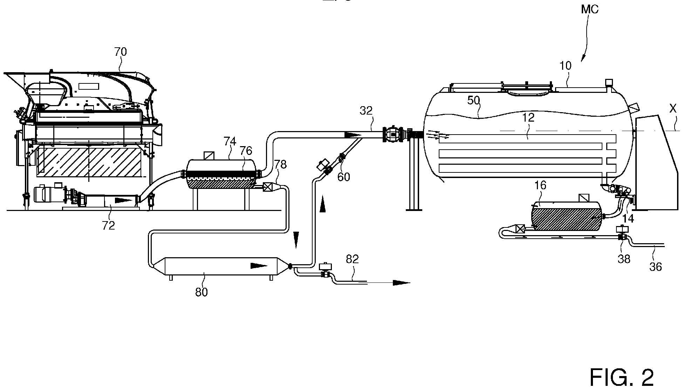

While Fig. 1 illustrates a system with components dependent on - and connected to - the press MC, Fig. 2 illustrates a system independent of the press MC, or e.g. connectable to the press MC and preferentially locatable downstream a pump 72 to push crushed material from the outlet of a destemmer 70 to the press MC.

The operating logic is the same as in fig. 1.

A tank 74 is placed downstream the destemmer 70 and with a sieve 76, e.g. a perforated tube, collects juice (liquid part) from the crushed material generated by the destemmer 70. The tank 74 feeds crushed material directly into the aforementioned conduit 32.

Via a pump 78 the juice extracted in/from the tank 74 is sent to a heat exchanger 80 external to the press MC to cool the juice. Then the cooled juice is fed back into the conduit 32 of the press MC or other machine.

In this solution too there is the variant with the recirculation of part or all of the must at the outlet of the exchanger directly into the tank 74 in order to improve the thermal efficiency of the system, especially during the steps of discontinuous loading of the press.

Preferably, also a conduit 82 runs from the exchanger 80 to convey the cooled juice to a storage tank.

Also the system shown in Fig. 2 comprises the variant in which the cooled juice is also or only recirculated, through a valve system and a pipe, into the tank 74 to increase cooling efficiency.

In an embodiment not shown, the invention is directly applied to a crushed material transfer pump normally located below the destemmer 70.

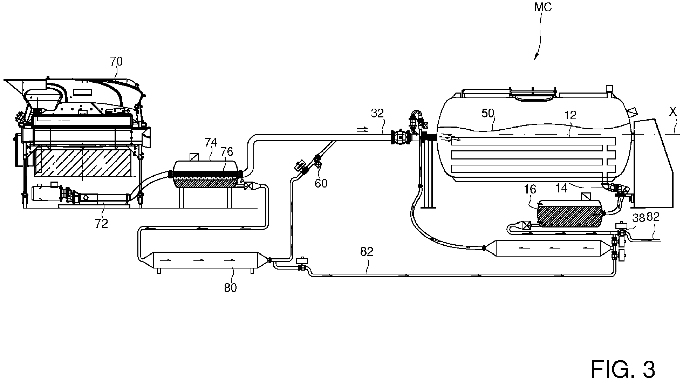

The systems in fig. 1 and fig. 2 can also work together, see fig. 3, so as to obtain a double heat abatement for the juice extracted from the crushed material and then injected into the press MC.

## Claims

1. Method for processing a crushed vegetable material, e.g. crushed grapes, comprising the steps of:
obtaining the crushed material and send it to a separating machine (10) to separate the juice from the crushed material;
separating a liquid part from the crushed material;
cooling the liquid part in an environment (30) outside the separating machine;
introducing and/or mixing the cooled liquid part in/with the crushed material inside the separating machine (10) or in a part of loading pipe (32) for the separating machine.

2. Method according to claim 1, wherein the liquid part is juice obtained inside the separating machine (30).

3. Method according to claim 1 or 2, wherein the liquid part is juice separated from the crushed material before the crushed material arrives inside the separating machine.

4. Method according to claim 1 or 2 or 3, wherein the liquid part is accumulated outside the separating machine in an accumulation volume (16; 74) before the cooling step.

5. Method according to claim 4, wherein the cooled liquid part is recirculated inside the storage volume.

6. Method according to any previous claim, wherein an inert gas is added to the liquid part.

7. System (MC) for processing a vegetable material, e.g. crushed grapes, comprising:
a separating machine (10) equipped with means or a chamber (10) for separating liquid part and solid part of the crushed material;
a heat exchanger (50) which is external to - and preferably separate from - the separating machine and connected to the separating machine so as to
receive liquid part separated from the separating machine,
cool it,
and re-send a cooled liquid part inside the separating machine to mix it with the crushed material present therein, e.g. in the chamber or in said means for separating.

8. System (MC) for feeding a crushed material, e.g. crushed grapes, to a separating machine (10) equipped with means or a chamber for separating liquid part and solid part of the crushed material, comprising:
a duct (32) external to the separating machine for transferring crushed material into the separating machine,
a separator device (74) for separating liquid part and solid part of the crushed material running a within the duct;
a heat exchanger (80) that is
external to - and preferably separate from - the separating machine, and
connected to the separator device and connectable to the separating machine so as to
receive liquid part separated by the separator device,
cool the liquid part,
and re-send cooled liquid part inside the separating machine to mix it with the crushed material present therein, e.g. in the chamber or in said means.

9. System according to claim 7 or 8, comprising means for sending cooled liquid part from a draining or accumulation volume towards a final storage tank.

10. System according to claim 7 or 8 or 9, comprising a tank external to the separating machine for collecting and/or accumulating the separated liquid part or recirculated liquid part coming from the separating machine or from the separator device or from the heat exchanger.

11. Pump for pumping crushed vegetable material comprising:
a device for advancing the crushed material into a duct, and a device for separating juice from the crushed material and sending the separated juice to the outside of the pump.
